# EUROPEAN PATENT APPLICATION

(11) **EP 0 928 088 A2**
(43) Date of publication of application: **07.07.1999**
(21) Application number: 98402949.6
(22) Date of filing: 26.11.1998
(51) Int. Cl.: H04L 25/03

(54) **Transmitter-end equalistion**

(30) Priority: 05.12.1997 ES 9702539
(71) Applicant: ALCATEL, 75008 Paris (FR)
(72) Inventor: Fernandez Duran, Alfonso, 28229 Villanueva del Pardillo, Madrid (ES); Gonzalez Ahijado, Angel, 28916 Leganes, Madrid (ES); Paez Borrallo, José Manuel, 28230 Las Rozas, Madrid (ES)
(74) Representative: Feray, Valérie

(57) **Abstract**

The present invention refers to a link interface interconnecting a first unit (**BSC**) and a second unit (**BTS**) of a telecommunications system. The interface comprises:
- a first link (**L1**) to connect transmitting means (**10**) in the first unit (**BSC**) and receiving means (**20**) in the second unit; and
- a second link (**L2**) to connect transmitting means (**21**) in the second unit (**BTS**) with receiving means (**11**) in the first unit.

The first unit (**BSC**) comprises equalising means (**13**) to equalise a signal received from said second unit (**BTS**).

The interface is characterised in that the first unit (**BSC**) comprises predistortion means, the coefficients of which are calculated as a function of data transmitted from said second unit (**BTS**) to said first unit (**BSC**) on said first link (**L1**).

## Description

### OBJECT OF THE INVENTION

The present invention refers to an interface that interconnects a first unit and at least one second unit for telecommunications via cables or, more generally, physical bearers for data transmission. More precisely, the interface uses equalisation devices to equalise the signals transmitted between the first unit and the second unit. For example, the first and second units are a base station controller and a base station, respectively.

### STATE OF THE ART

The state of the art suggest a link interface interconnecting a first unit, of the base station controller (BSC) type, and a second unit of the base station (BTS) type. The interface comprises:
- a first link to connect a transmitting circuit in the first unit and a receiving circuit in the second unit; and
- a second link to connect a transmitting circuit in the second unit and a receiving circuit in the first unit.

In addition, the first unit comprises an equalising circuit to equalise a signal received from the second unit on the second link and the second unit comprises an equalising circuit to equalise a signal received from the first unit on the first link.

One of the problems with this solution according to the state of the art is that said solution implies a loss of power in the remote feeding of the equaliser in the second unit from the first unit.

### CHARACTERISATION OF THE INVENTION

An object of the present invention is to provide a suitable interface to overcome the problem above defined.

Consequently, a link interface interconnecting a first unit and a second unit of a telecommunications system, said interface comprising:
- a first link to connect transmitting means in the first unit with receiving means in the second unit; and
- a second link to connect transmitting means in the second unit with receiving means in the first unit;
- the first unit comprising equalising means to equalise a signal received from said second unit;
is characterised in that said first unit comprises predistortion means, the coefficients of which are calculated as a function of data transmitted from said second unit to said first unit on said first link.

### BRIEF DESCRIPTION OF THE FIGURES

A more detailed explanation of the present invention is provided in the following description, based on the attached figures, in which:
- figure 1 shows a block diagram of a link interface according to the invention;
- figure 2 shows a block diagram of an equaliser included in a receiving circuit of a unit of figure 1; and
- figure 3 shows a block diagram of a predistortion device included in a transmitting circuit of the same unit.

### DESCRIPTION OF THE INVENTION

In a very different environment of a connection via radio with mobile terminals, the article "Adaptive Channel Precoding for Personal Communications" by W. ZHUANG et al., published in the review "Electronics Letters" of September 15th, 1994, vol. 30, n°19, pages 1570 to 1571, incorporated in this patent application by reference, describes a device including an equaliser and a predistortion means or predistorter. According to this article, the use of a function for "bi-directional equalising correction" in a single first transmission/reception unit permits the complexity of the other second unit(s) which exchange data with said first unit to be reduced, and thus to reduce the cost of the very numerous mobile terminals present in a radiocommunications network.

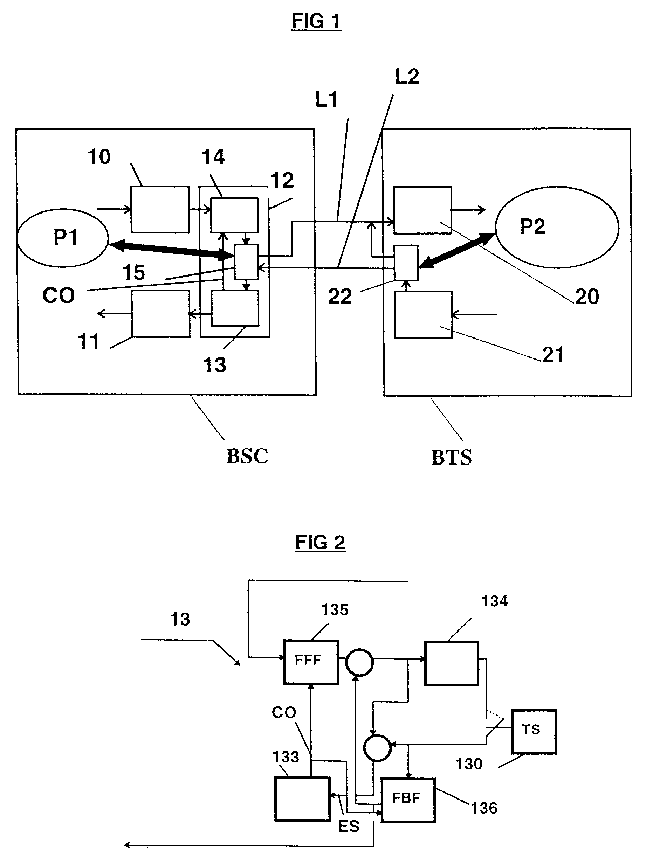

With reference to figure 1, a link interface according to the present invention is shared between a first unit **BSC** and a second unit **BTS**. The interface comprises, in the first unit **BSC**, a transmitting circuit **10**, a receiving circuit **11** and a bi-directional equalising unit **12**; and in the second unit **BTS**, a receiving circuit **20**, a transmitting circuit **21** and a switch **22** controlled by a computer program **P2**. The power supply for the **BTS** unit is provided from the **BSC** unit by means of a power-feeding cable (not shown). The bi-directional equalising unit **12** comprises a predistortion circuit or predistorter **14,** an equalising circuit or equaliser **13** and a switch **15** which is controlled by a computer program **P1**.

A protocol is established between the programs **P1** and **P2** which defines two stages: a calculation stage of the coefficients of the equaliser **13** and a calculation stage of the coefficients of the predistorter **14**.

The predistorter **14** applies predistortion to the transmitted signal, which is "equivalent" to applying equalisation to the received signal.

During the calculation stage of the coefficients of the equaliser **13**, the coefficients of the equaliser **13** are defined by using a training sequence transmitted from the unit **BTS** to the unit **BSC**. For this stage the switch **22** and the switch **15** are controlled by the programs **P2** and **P1**, respectively, such that:
(a) - the data transmitted by the transmitting circuit **10** are received by the receiving circuit **20** via the predistorter **14** and a first link **L1**, and
(b) - the data possibly transmitted by the transmitting circuit **21** are received by the receiving circuit **11** via a second link **L2** and the equaliser **13.**

During the calculation stage of the coefficients of the predistorter **14**, the switch **22** and the switch **15** are controlled by the programs **P2** and **P1**, respectively, such that:
(a) - the data transmitted by the transmitting circuit **21** are received by the receiving circuit **11** via the first link **L1** and the equaliser **13**, and
(b) - no data are transmitted by the transmitting circuit **10**.

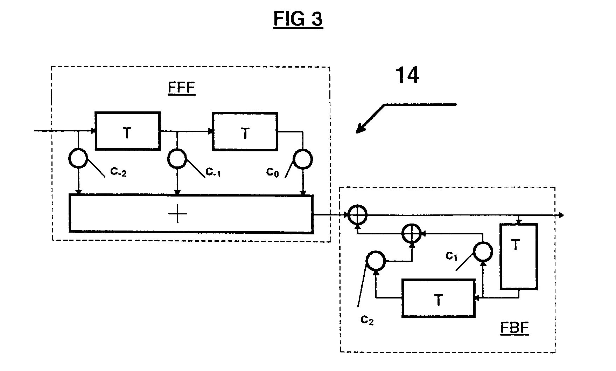

Figure 2 shows the equalising circuit or equaliser **13**. The circuit, in accordance with a known implementation, comprises a linear feed-forward filter **135** and a linear feedback filter **136**, both defined by delay lines T and coefficients c₋₂, c₋₁, c₀, c₁ and c₂ (see figure 3), and a computing module **133**. The equaliser **13** also comprises a logic circuit **130** which stores a preset data sequence **TS**. An output of the filter **135** is connected to an input of the symbol detector **134** through an adder the second input of which is connected to an output of the filter **136**.

During the calculation stage of the coefficients of the equaliser **13**, the output of the logic circuit **130** is applied to an input of the filter **136.** Other than during this stage, the output of the symbol detector **134** is applied to an input of the filter **136**. During reception of the training sequence received from the **BTS** unit, an algorithm stored in the computing module **133** changes the coefficients CO = (c₋₂, c₋₁, c₀, c₁ c₂) of the filters **135** and **136** such that the preset data sequence signal **TS** stored in the logic circuit **130** is as similar as possible to the signal that is produced at the input of the symbol detector whereby an error signal **ES** between these two signals is obtained, the mean square value of which tends asymptotically to zero.

At the end of the calculation stage of the coefficients of the equaliser **13**, the algorithm which is developed in the computing module **133** is frozen so that the coefficients c₋₂, c₋₁, c₀, c₁ and c₂ calculated in both filters **135** and **136** of the equaliser 13 are maintained constant.

During the calculation stage of the coefficients of the predistorter **14**, a training sequence transmitted by the transmitting circuit **21** is received by the receiving circuit **11** on the first link **L1** and via the equaliser **13**. According to the invention, the coefficients CO obtained by the equaliser **13** at the end of this calculation stage are transmitted to the predistorter **14** of the **BSC** unit. Thus, the equaliser **13** calculates the coefficients of the predistorter **14**. Figure 3 shows this predistorter of the type described in the article "Adaptive Channel Precoding for Personal Communications" by W. ZHUANG et al., published in the review "Electronics Letters" of September 15th, 1994, vol. 30, n° 19, pages 1570 to 1571. It results that the coefficients that are used to predistort the data transmitted by the transmitting circuit **10** take into account the different characteristics of the link, or line, **L1** with respect to the line **L2**.

The coefficients of the equaliser **13** and of the predistorter **14** are calculated periodically, without it being necessary to perform this calculation very frequently. This is due to the fact that the characteristics of the physical lines are very stable with time.

## Claims

1. Link interface interconnecting a first unit (**BSC**) and a second unit (**BTS**) of a telecommunications system, comprising:
(a) - a first link (**L1**) to connect transmitting means (**10**) of the first unit (**BSC**) with receiving means (**20**) in the second unit;
(b) - a second link (**L2**) to connect transmitting means (**21**) in the second unit (**BTS**) with receiving means (**11**) of the first unit;
said first unit (**BSC**) comprising equalising means (**13**) to equalise a signal received from said second unit (**BTS**);
**characterised in that** said first unit (**BSC**) comprises predistortion means (**14**), the coefficients of which are calculated as a function of data transmitted from said second unit (**BTS**) to said first unit (**BSC**) on said first link (**L1**).

2. Link interface according to claim 1, **characterised in that** said equalising means (**13**) calculate said coefficients of the predistortion means.
